# EUROPEAN PATENT SPECIFICATION

(11) **EP 3 023 439 B1**
(45) Date of publication and mention of the grant of the patent: **07.02.2018**
(21) Application number: 14825947.6
(22) Date of filing: 14.07.2014
(51) Int. Cl.: C08F 2/00, C08F 4/48, C08F 36/04, C08F 2/01, C08F 2/06, C08F 212/08

(54) **METHOD FOR PRODUCING POLYMER**
METHODE ZUR HERSTELLUNG VON POLYMEREN
PROCÉDÉ POUR LA PRÉPARATION DE POLYMÈRES

(30) Priority: 17.07.2013 JP 2013148936
(43) Date of publication of application: 25.05.2016
(73) Proprietor: Asahi Kasei Kabushiki Kaisha, Chiyoda-ku Tokyo 101-8101 (JP)
(72) Inventor: TOKIWA, Tetsuji, Tokyo 101-8101 (JP)
(74) Representative: Strehl Schübel-Hopf & Partner
(86) International application number: PCT/JP2014/068745
(87) International publication number: WO 2015/008736

(56) References cited:
- EP-A1- 0 648 790
- EP-A1- 2 559 709
- CA-A1- 2 057 847
- GB-A- 1 255 764
- JP-A- H03 153 702
- JP-A- H04 279 614
- JP-A- H05 148 306
- JP-A- H06 199 921
- JP-A- H07 233 228
- JP-A- S63 179 911
- JP-A- 2005 513 172
- US-A- 4 587 314

## Description

### Technical Field

The present invention relates to a method for producing a polymer.

### Background Art

A method for polymerizing a conjugated diene monomer or an aromatic vinyl monomer in a solution with an organolithium compound as an initiator has the problems of polymer adhesion to the inner wall of a polymerization tank, and gel generation. A polymer and/or gel may adhere to the inner wall of a polymerization tank to cause a reduction in the removal efficiency of heat of polymerization by a jacket, and incorporation of the gel generated, into a product, adversely affecting various performances of the product. As solutions for solving such problems, for example, there are proposed a method of adding 1,2-butadiene and an ether into a polymerization tank to suppress gel generation (see, for example, Patent Document 1), and a method of using a scraper type or wiper type stirring blade for a stirring blade of a polymerization tank to suppress polymer adhesion (see, for example, Patent Document 2).

### List of Prior Art Documents

### Patent Documents

Patent Document 1: Japanese Patent Laid-Open No. 59-176311
Patent Document 2: National Publication of International Patent Application No. 2012-531515

GB 1 255 764 A1 discloses a method for the preparation of living polymers, wherein the linear velocity of the reaction mixture in the reactor is 0.1 to 3 m/sec for the purpose of preventing backmixing.

### Summary of Invention

### Problems to be Solved by Invention

Even in the methods described in Patent Documents 1 and 2, however, gel generation is not still sufficiently suppressed around a portion where gel generation most easily occurs, namely, a feed port of a polymerization initiator (for example, organolithium compound), and a further improvement is demanded.

An object of the present invention is to suppress gel generation around a feed port of an organolithium compound that is a polymerization initiator, thereby preventing incorporation of gel into a product.

### Means for Solving Problems

The present inventors have made intensive studies in order to solve the problems of the conventional art, and as a result, have found that, when an organolithium compound as an initiator is fed into a polymerization tank, the linear velocity at the feed opening is set to be in the range from 0.1 to 5 m/sec, to thereby significantly suppress gel generation around such a feed port and also sufficiently suppress incorporation of gel into a product, leading to the present invention.

The present invention is as follows.
[1] A method for producing a polymer, comprising
   step (1) of continuously feeding a monomer comprising a conjugated diene compound and/or an aromatic vinyl compound to a polymerization tank, and
   step (2) of continuously feeding a solution comprising an organolithium compound to the polymerization tank, wherein
   a linear velocity of the solution comprising the organolithium compound at an opening of a feed port in step (2) is 0.1 to 5 m/sec, wherein the inner diameter of the pipe of the feed port is 3 to 100 mm, and wherein the position in the polymerization tank, at which the solution containing the organolithium compound is supplied is the bottom of the polymerization tank.
[2] The method for producing the polymer according to [1], wherein the monomer comprises at least a conjugated diene compound.
[3] The method for producing the polymer according to [1] or [2], wherein the solution comprising the organolithium compound fed to the polymerization tank has a concentration of the organolithium compound of 0.01 to 1% by mass.

### Advantages of Invention

The method of the present invention enables gel generation around a feed port of an organolithium compound in a polymerization tank to be suppressed, and enables incorporation of gel into a product to be suppressed.

### Mode for Carrying Out Invention

Hereinafter, an embodiment for carrying out the present invention (hereinafter, referred to as the "present embodiment".) is described in detail.

It is to be noted that the present invention is not limited to the following embodiments and can be performed with being variously modified within the gist thereof.

### <Method for producing polymer>

A method for producing a polymer of the present embodiment comprises step (1) of continuously feeding a monomer containing a conjugated diene compound and/or an aromatic vinyl compound to a polymerization tank, and step (2) of continuously feeding a solution containing an organolithium compound to the polymerization tank, wherein the linear velocity of the solution containing the organolithium compound at an opening of a feed port in step (2) is 0.1 to 5 m/sec.

In the present embodiment, the monomer in step (1) is preferably a monomer containing a conjugated diene compound because the effect of the present invention is remarkably exerted.

In the production method of the present embodiment, such a monomer can be polymerized using a polymerization initiator (organolithium compound) to thereby provide a polymer of a conjugated diene compound and/or an aromatic vinyl compound.

The resulting polymer is preferably a polymer of a conjugated diene compound and/or an aromatic vinyl compound, preferably a polymer of a conjugated diene compound.

The polymerization process for use in the present embodiment may be any of batch type, semi-batch type and continuous type processes, and is preferably a continuous type process because the effect of the present invention is remarkably exerted. In the present embodiment, examples of continuous polymerization include, but not particularly limited, a polymerization process of a system in which starting materials such as an initiator, a monomer and a solvent are continuously fed to a polymerization tank at predetermined feed speeds to thereby allow a polymerization reaction to be continuously performed, and a polymerization reaction solution containing the resulting polymer is continuously discharged from the polymerization tank.

### <Polymer of conjugated diene compound>

In the present embodiment, the polymer of a conjugated diene compound means a polymer of a conjugated diene compound, or a copolymer with an aromatic vinyl compound or other monomer copolymerizable with a conjugated diene compound.

### <Conjugated diene compound>

The conjugated diene compound for use in the method for producing the polymer of the present embodiment is not particularly limited as long as it is a polymerizable monomer, and examples include 1,3-butadiene, isoprene, 2,3-dimethyl-1,3-butadiene, 1,3-pentadiene, 3-methyl-1,3-pentadiene, 1,3-heptadiene and 1,3-hexadiene. Among them, 1,3-butadiene or isoprene is preferable from the viewpoint of industrial availability. These may be used singly or in combinations of two or more. If allenes, acetylenes, and the like are contained as impurities in the conjugated diene compound, these may inhibit a modification reaction described later. Therefore, the total content concentration (mass) of such impurities in the conjugated diene compound is preferably 200 ppm or less, more preferably 100 ppm or less, further preferably 50 ppm or less.

Examples of allenes include, but not particularly limited, propadiene and 1,2-butadiene. Examples of acetylenes include, but not particularly limited, ethyl acetylene and vinyl acetylene.

### <Polymer of aromatic vinyl compound>

In the present embodiment, the aromatic vinyl polymer means a polymer of an aromatic vinyl compound, or a copolymer with a conjugated diene compound or other monomer copolymerizable with an aromatic vinyl compound.

Herein, when the polymer contains a conjugated diene compound and an aromatic vinyl compound, the polymer is designated as a polymer of a monomer contained in a higher content mass ratio.

### <Aromatic vinyl compound>

Examples of the aromatic vinyl compound for use in the present embodiment include, but not particularly limited, styrene, m- or p-methylstyrene, α-methylstyrene, vinylethylbenzene, vinylxylene, vinylnaphthalene, diphenylethylene and divinylbenzene. Among them, styrene is preferable from the viewpoint of industrial availability. These may be used singly or in combinations of two or more.

### <Other monomer copolymerizable with conjugated diene compound or aromatic vinyl compound>

Examples of other monomer copolymerizable with a conjugated diene compound or an aromatic vinyl compound include, but not particularly limited, methacrylate, acrylate, acrylonitrile, acrylamide, cyclohexene, cyclohexadiene and cyclopentene. These may be used singly or in combinations of two or more.

### <Polymerization systems of polymer of conjugated diene compound and polymer of aromatic vinyl compound>

When the polymer of a conjugated diene compound and the polymer of an aromatic vinyl compound are each a copolymer, such a copolymer may be a random copolymer or a block copolymer.

Examples of the random copolymer include, but not particularly limited, a butadiene-isoprene random copolymer, a butadiene-styrene random copolymer, an isoprene-styrene random copolymer and a butadiene-isoprene-styrene random copolymer. Examples of the composition distribution of each monomer in the copolymer chain include, but not particularly limited, a complete random copolymer whose composition is close to statistically random composition, and a taper (gradient) random copolymer having a gradient in its composition distribution. The bonding modes of conjugated dienes, namely, the compositions of a 1,4-bond, a 1,2-bond, and the like may be uniform or different depending on the molecular chain.

Examples of the block copolymer include, but not particularly limited, a 2 type block copolymer having two blocks, a 3 type block copolymer having three blocks, and a 4 type block copolymer having four blocks. When the block of an aromatic vinyl compound such as styrene is designated as S, and the block of a conjugated diene compound such as butadiene or isoprene and/or the block of a copolymer of an aromatic vinyl compound and a conjugated diene compound is designated as B, examples of the block copolymer include, but not particularly limited, an S-B 2 type block copolymer, an S-B-S 3 type block copolymer and an S-B-S-B 4 type block copolymer.

In the above formulae, the boundary between respective blocks is not necessarily required to be clearly distinguished. For example, when the block B is a copolymer of an aromatic vinyl compound and a conjugated diene compound, the aromatic vinyl compound in the block B may be uniformly distributed, or may be distributed in a tapered manner. In addition, a plurality of moieties in which the aromatic vinyl compound is uniformly distributed and/or a plurality of moieties in which the aromatic vinyl compound is distributed in a tapered manner may coexist in the block B. Furthermore, a plurality of segments having a different aromatic vinyl compound content may coexist in the block B. When a plurality of the blocks S and a plurality of the blocks B are present in the copolymer, the molecular weights, the compositions, and the like thereof may be the same or different.

### <Organolithium compound>

In the method for producing the polymer of the present embodiment, examples of the organolithium compound for use as the polymerization initiator include, but not particularly limited, an organolithium compound of a low-molecular compound or an oligomer solubilized. Examples of the organolithium compound represented by the bonding mode of an organic group and lithium include, but not particularly limited, an organolithium compound having a carbon-lithium bond, an organolithium compound having a nitrogen-lithium bond, and an organolithium compound having a tin-lithium bond.

Examples of the organolithium compound having the carbon-lithium bond include, but not particularly limited, n-butyllithium, sec-butyllithium, tert-butyllithium, n-hexyllithium, benzyllithium, phenyllithium and stilbenelithium.

Examples of the organolithium compound having the nitrogen-lithium bond include, but not particularly limited, lithium dimethylamide, lithium diethylamide, lithium dipropylamide, lithium di-n-hexylamide, lithium diisopropylamide, lithium hexamethyleneimide, lithium pyrrolidide, lithium piperidide, lithium heptamethyleneimide and lithium morpholide.

As the organolithium compound, not only the above monoorganolithium compound, but also a polyfunctional organolithium compound can be used, or the monoorganolithium compound and a polyfunctional organolithium compound can be used in combination.

Examples of the polyfunctional organolithium compound include, but not particularly limited, 1,4-dilithiobutane, a reaction product of sec-butyllithium with diisopropenylbenzene, 1,3,5-trilithiobenzene, a reaction product of n-butyllithium with 1,3-butadiene and divinylbenzene, and a reaction product of n-butyllithium with a polyacetylene compound. Furthermore, the organolithium compounds disclosed in U.S. Patent No. 5,708,092, GB Patent No. 2,241,239, U.S. Patent No. 5,527,753, and the like can also be used.

As the organolithium compound, n-butyllithium or sec-butyllithium is preferable from the viewpoint of industrial availability and ease of control of a polymerization reaction.

The organolithium compound may be used singly or as a mixture of two or more.

In the method for producing the polymer of the present embodiment, the organolithium compound is used for polymerization in the state of a solution containing the organolithium compound in order to improve handleability, and dispersibility in the polymerization solution. Examples of the solution containing the organolithium compound include, but not particularly limited, a solution in which the organolithium compound is diluted with a hydrocarbon solvent. Specific examples of the hydrocarbon solvent include, but not particularly limited, C4 to C8 aliphatic hydrocarbons, and toluene and xylene. The hydrocarbon for use as the solvent may be a cyclic hydrocarbon or may include an unsaturated bond and/or a branched structure. As the hydrocarbon solvent, C5 and C6 hydrocarbons are preferable because of having a boiling point and a vapor pressure so as to be easily handled in a production process, and specifically, pentane, normal hexane (n-hexane) or cyclohexane is preferably used.

The solution containing the organolithium compound, when fed to the polymerization tank, preferably has a concentration of the organolithium compound in the range from 0.005 to 1% by mass, more preferably 0.01 to 1% by mass, further preferably 0.01 to 0.5% by mass, particularly preferably 0.01 to 0.1% by mass from the viewpoint of polymerization initiation efficiency, and uniform mixing properties with the monomer.

The organolithium compound is usually stored in a storage tank in the state of being diluted with a solvent (for example, hydrocarbon solvent) so as to be in a concentration of 10 to 20% by mass from the viewpoint of handleability. In the present embodiment, the solution containing the organolithium compound is preferably adjusted so as to have a concentration of the organolithium compound in the above range immediately before the solution is fed to the polymerization tank. The method of adjusting the concentration of the organolithium compound is not particularly limited, and a method of continuously adjusting the concentration of the organolithium compound in a pipe for feeding the solution to the polymerization tank is preferable because of being excellent in efficiency. Specifically, a method is included in which a solution containing the organolithium compound in a concentration of 10 to 20% by mass is allowed to flow in one pipe for coupling, a dilution solvent (for example, hydrocarbon solvent) is allowed to flow in the other pipe for coupling, and the solution and the dilution solvent are mixed at the connecting point of both the pipes.

In the above method, a Venturi tube is preferably used for the purpose of an improvement in mixing properties. The dilution solvent flows in the Venturi tube, and the solution containing the organolithium compound in a concentration of 10 to 20% by mass is combined therewith in a throttle part of the Venturi tube, thereby allowing the effect of enhancing uniformity of the organolithium compound to be exerted.

The position in the polymerization tank, at which the solution containing the organolithium compound is supplied, is the bottom of the polymerization tank from the viewpoint of the yield of the polymerization reaction. The bottom of the polymerization tank here means a portion located lower than half the height of the polymerization tank in the longitudinal direction, more preferably a portion located equal to or lower than a fifth of the height of the polymerization tank in the longitudinal direction.

### <Step (1) >

The method for producing the polymer of the present embodiment comprises step (1) of feeding at least a monomer containing a conjugated diene compound and/or an aromatic vinyl compound to a polymerization tank. In step (1), the monomer containing the conjugated diene compound and/or the aromatic vinyl compound is continuously fed to the polymerization tank.

In step (1), while the monomer containing the conjugated diene compound and/or the aromatic vinyl compound may be fed to the polymerization tank singly or in the state of a solution containing a solvent, the monomer is preferably fed in the state of a solution containing a solvent from the viewpoint of handleability of the monomer in a purification step or a polymerization step. Examples of the solvent include C4 to C8 aliphatic hydrocarbons, and toluene and xylene. The hydrocarbon for use as the solvent may be a cyclic hydrocarbon or may include an unsaturated bond and/or a branched structure. As the solvent, C5 and C6 hydrocarbons are preferable because of having a boiling point and a vapor pressure so as to be easily handled in a production process, and specifically, pentane, normal hexane (n-hexane) or cyclohexane is preferably used.

The concentration of the monomer in the state of the solution containing the solvent is preferably 10 to 50% by mass from the viewpoint of mixing properties of the monomer with the organolithium compound, and removal of heat of polymerization.

### <Step (2) >

The method for producing the polymer of the present embodiment comprises step (2) of feeding a solution containing an organolithium compound to the polymerization tank. In step (2), the solution containing the organolithium compound is continuously fed to the polymerization tank. In addition, the solution containing the organolithium compound is preferably diluted by the above method when fed to the polymerization tank.

In step (2), the linear velocity of the solution containing the organolithium compound at an opening of a feed port is 0.1 to 5 m/sec from the viewpoint of suppression of gel generation, and the yield. The linear velocity is preferably 0.5 to 2 m/sec, more preferably 0.7 to 1.5 m/sec from the viewpoint of mixing properties of the organolithium compound with the monomer in the polymerization tank. The linear velocity here is the numerical value (F/S) obtained by dividing the flow rate (F [m3/sec]) of the organolithium fed into the polymerization tank by the cross-sectional area (S [m²]) of the feed pipe. The opening of the feed port refers to the connecting portion between the feed pipe of the solution containing the organolithium compound and the polymerization tank.

In the present embodiment, step (1) and step (2) are preferably continuously performed at the same time, and the polymerization reaction of the conjugated diene compound and/or the aromatic vinyl compound is preferably continuously performed in the polymerization tank. In this case, the polymer solution of the conjugated diene compound and/or the aromatic vinyl compound, generated, is also preferably continuously discharged from the polymerization tank.

### <Polymerization tank>

The polymerization tank may be any of continuous type, batch type and semi-batch type polymerization tanks, and is preferably a continuous type polymerization tank because the effect of the present invention is remarkably exerted. Examples of the continuous type polymerization tank include, but not particularly limited, one, or two or more polymerization tanks coupled, and two or more polymerization tanks coupled are preferable from the viewpoint of controlling the molecular weight distribution, for example, enabling the molecular weight distribution of the resulting polymer of the conjugated diene compound and/or the aromatic vinyl compound to be narrow.

Examples of the polymerization tank for use in the present embodiment include, but not particularly limited, a bath type or tube type polymerization tank equipped with a stirrer.

The polymerization tank for use in the present embodiment has a feed port for feeding the solution containing the organolithium compound. The position of the feed port is not particularly limited, and is preferably located at the bottom portion of the polymerization tank from the viewpoint of operating properties in starting of continuous polymerization. The inner diameter of the feed port can be appropriately selected as long as it is not problematic in imparting the linear velocity at an opening of the feed port of the solution containing the organolithium compound. The inner diameter of the pipe of the feed port is 3 to 100 mm, more preferably 3 to 50 mm, further preferably 5 to 30 mm.

In addition, the relationship between the concentration (C% by mass) of the organolithium compound in the solution and the linear velocity (V m/sec) of the solution at the opening is preferably 1 < (V/C) < 200, more preferably 7 < (V/C) < 110, particularly preferably 10 < (V/C) < 50.

The polymerization tank for use in the present embodiment preferably has a size of 0.05 to 100 m³ from the viewpoint of the balance between productivity and removal of heat. In addition, the ratio (L/D) of the length (L) to the inner diameter (D) of the polymerization tank is preferably 0.5 to 20, more preferably 1 to 10, further preferably 2 to 8 from the viewpoint of the yield of the polymerization reaction and control of the molecular weight distribution.

In continuous type polymerization, the inside of the polymerization tank is preferably completely filled with the polymerization solution because adhesion of the polymerized product onto the inner wall surface of a gas phase portion is suppressed.

The temperatures in steps (1) and (2) are preferably 0 to 80°C, more preferably 20 to 40°C.

### <Other steps>

### • Step of feeding solvent

In the method for producing the polymer of the present embodiment, the polymerization reaction of the conjugated diene compound and/or the aromatic vinyl compound is preferably performed in a solvent. Therefore, the method for producing the polymer of the present embodiment preferably comprises a step of feeding a solvent to the polymerization tank. Examples of the solvent include, but not particularly limited, hydrocarbon type solvents such as a saturated hydrocarbon and an aromatic hydrocarbon. Specific examples include aliphatic hydrocarbons such as butane, pentane, hexane and heptane; alicyclic hydrocarbons such as cyclopentane, cyclohexane, methyl cyclopentane and methyl cyclohexane; aromatic hydrocarbons such as benzene, toluene and xylene, as well as hydrocarbons including mixtures thereof.

Such a solvent may contain impurities such as allenes and acetylenes in some cases. In such cases, such impurities in the solvent are preferably treated with an organometallic compound before the polymerization reaction because a polymer having an active terminal in a high concentration tends to be obtained, and furthermore a high modification rate is achieved in the case of modification of the polymer.

The solvent may be fed to the polymerization tank in the state of a mixture with the monomer and the organolithium compound or may be fed to the polymerization tank singly, and is preferably fed to the polymerization tank in the state of a mixture with the monomer and the organolithium compound from the viewpoint of uniform mixing properties in the polymerization tank.

### • Step of feeding polar compound

In the method for producing the polymer of the present embodiment, a polar compound may be added in the polymerization reaction of the conjugated diene compound and/or the aromatic vinyl compound. Therefore, the method for producing the polymer of the present embodiment may comprise a step of feeding a polar compound to the polymerization tank. The polar compound can be used in order to randomly copolymerize the aromatic vinyl compound with the conjugated diene compound, and can also be used as a vinylating agent for controlling the microstructure of a conjugated diene moiety. In addition, the polar compound is also effective for an improvement in polymerization rate, and the like.

The polar compound is not particularly limited, and for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene and 2,2-bis(2-oxolanyl)propane; tertiary amine compounds such as tetramethylethylene diamine, dipiperidinoethane, trimethylamine, triethylamine, pyridine and quinuclidine; alkali metal alkoxide compounds such as potassium-t-amilate, potassium-t-butyrate, sodium-t-butyrate and sodium amilate; and phosphine compounds such as triphenylphosphine can be used. These polar compounds may be used singly or in combinations of two or more, respectively.

The amount of the polar compound to be used is not particularly limited, and can be selected depending on the object and the like. Usually, the amount is preferably 0.01 to 100 mol per mol of the polymerization initiator. Such a polar compound (vinylating agent) can be used as a modulator of the microstructure of a conjugated diene moiety in the polymer in a proper amount depending on the desired amount of a vinyl bond.

Most polar compounds also have an effective effect of randomly copolymerizing the conjugated diene compound and the aromatic vinyl compound, and can be used for adjustment of the aromatic vinyl distribution or as an adjuster of the amount of a styrene block. The method for randomly copolymerizing the conjugated diene compound and the aromatic vinyl compound is not particularly limited, and for example, the method described in Japanese Patent Laid-Open No. 59-140211 can also be used which comprises intermittently adding a part of 1,3-butadiene during copolymerization.

While the polar compound may be fed to the polymerization tank singly or in the state of a solution containing a solvent or a mixed liquid with the monomer solution, the polar compound is preferably fed as a mixed liquid with the monomer solution from the viewpoint of uniform mixing properties.

### • Polymerization step

In the method for producing the polymer of the present embodiment, the polymer of the conjugated diene compound and/or the aromatic vinyl compound is obtained by the polymerization reaction (polymerization step) of the monomer containing the conjugated diene compound and/or the aromatic vinyl compound.

The polymerization temperature is not particularly limited and may be any temperature at which the polymerization reaction of the monomer containing the conjugated diene compound and/or the aromatic vinyl compound progresses, and is preferably 0°C or higher from the viewpoint of productivity and is preferably 120°C or lower from the viewpoint of sufficiently ensuring the amount of a modifier reactive with the active terminal of the polymer after completion of polymerization.

### • Modification step

The method for producing the polymer of the present embodiment may also comprise a step (modification step) of reacting the polymer of the conjugated diene compound and/or the aromatic vinyl compound, obtained in the polymerization step described above, with a modifier to provide a modified polymer. The polymer of the conjugated diene compound and/or the aromatic vinyl compound, obtained in the polymerization step described above, usually has a polymerization active terminal. The polymerization active terminal of the polymer can be reacted with a modifier having a functional group to thereby provide a modified polymer. As the modifier, a compound having one or more functional groups selected from the group consisting of a glycidyl group, an alkoxysilyl group, a carbonyl group, a carboxylate group, a carboxylic acid amide group, an acid anhydride group, a phosphate group, a phosphite group, an epithio group, a thiocarbonyl group, a thiocarboxylate group, a dithiocarboxylate group, a thiocarboxylic acid amide group, an imino group, an ethylenimine group, a halogen group, an alkoxysilane group, an isocyanate group, a thioisocyanate group, a conjugated diene group and an aryl vinyl group is suitably used.

Specific examples of the modifier having the alkoxysilyl group include, but not particularly limited, dimethoxydimethylsilane, xydimethylsilane, diethoxydiethylsilane, triphenoxyvinylsilane, trimethoxyvinylsilane, triethoxyvinylsilane, tri(2-methylbutoxy)ethylsilane, tri(2-methylbutoxy)vinylsilane, triphenoxy phenylsilane, tetraphenoxysilane, tetraethoxysilane, tetramethoxysilane, tetrakis(2-ethylhexyloxy)silane, phenoxydivinyl chlorosilane, methoxydiethyl chlorosilane, diphenoxymethyl chlorosilane, diphenoxyphenyl iodosilane, diethoxymethyl chlorosilane, dimethoxyethyl chlorosilane, triethoxy chlorosilane, triphenoxy chlorosilane, tris(2-ethylhexyloxy)chlorosilane, phenoxymethyl dichlorosilane, methoxyethyl dichlorosilane, ethoxymethyl dichlorosilane, phenoxyphenyl diiodosilane, phenoxy dichlorosilane, dimethoxy dichlorosilane and bis(2-methylbutoxy)dibromosilane.

Furthermore, a compound having a nitrogen (N) atom and a plurality of alkoxysilyl groups in the molecule is preferably used as the modifier having an alkoxysilyl group.

Specific examples of the compound having the nitrogen (N) atom and a plurality of alkoxysilyl groups in the molecule include, but not particularly limited, 2,2-dimethoxy-1-(3-trimethoxysilylpropyl)-1-aza-2-silacyclopentane, 2,2-diethoxy-1-(3-triethoxysilylpropyl)-l-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, 2-ethoxy,2-ethyl-1-(3-diethoxyethylsilylpropyl)-1-aza-2-silacyclopentane, 1-[3-(trialkoxysilyl)-propyl]-4-alkylpiperazine, 1-[3-(alkyldialkoxysilyl)-propyl]-4-alkylpiperazine, 1-[3-(trialkoxysilyl)-propyl]-3-alkylimidazolidine, 1-[3-(alkyldialkoxysilyl)-propyl]-3-alkylimidazolidine, 1-[3-(trialkoxysilyl)-propyl]-3-alkylhexahydropyrimidine, 1-[3-(alkyldialkoxysilyl)-propyl]-3-alkylhexahydropyrimidine, 3-[3-(trialkoxysilyl)-propyl-1-alkyl]-1,2,3,4-tetrahydropyrimidine and 3-[3-(alkyldialkoxysilyl)-propyl]-1-alkyl-1,2,3,4-tetrahydropyrimidine. Specific examples of such a compound include, but not particularly limited, 1-[3-(triethoxysilyl)-propyl]-4-methylpiperazine, 1-[3-(diethoxyethylsilyl)-propyl]-4-methylpiperazine, 1-[3-(trimethoxysilyl)-propyl]-3-methylimidazolidine, 1-[3-(diethoxyethylsilyl)-propyl]-3-ethylimidazolidine, 1-[3-(triethoxysilyl)-propyl]-3-methylhexahydropyrimidine, 1-[3-(dimethoxymethylsilyl)-propyl]-3-methylhexahydropyrimidine, 3-[3-(tributoxysilyl)-propyl]-1-methyl-1,2,3,4-tetrahydropyrimidine, 3-[3-(dimethoxymethylsilyl)-propyl]-1-ethyl-1,2,3,4-tetrahydropyrimidine, 1-(2-ethoxyethyl)-3-[3-(trimethoxysilyl)-propyl]-imidazolidine and (2-{3-[3-(trimethoxysilyl)-propyl]-tetrahydropyrimidine-1-yl}-ethyl)dimethylamine.

Among them, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane or 1-[3-(triethoxysilyl)-propyl]-4-methylpiperazine is preferable from the viewpoint of reactivity and interactive property of the functional group of the modifier and an inorganic filler such as silica.

The modifier may be fed to the polymerization tank singly or may be fed to the polymerization tank after being diluted with a solvent, and is preferably fed to the polymerization tank after being diluted with a solvent from the viewpoint of uniform dispersibility of the conjugated diene compound and/or the aromatic vinyl compound in the polymer solution. The solvent is not particularly limited as long as it has no reactivity with a living polymer and the modifier, and specific examples include aliphatic hydrocarbons such as butane, pentane, hexane and heptane; alicyclic hydrocarbons such as cyclopentane, cyclohexane, methyl cyclopentane and methyl cyclohexane; aromatic hydrocarbons such as benzene, toluene and xylene, and hydrocarbons including mixtures thereof.

### • Step after polymerization

The method for producing the polymer of the present embodiment may comprise, after completion of polymerization, a step of adding a deactivator, a neutralizer or the like depending on the resulting polymer solution of the conjugated diene compound and/or the aromatic vinyl compound, if necessary. Examples of the deactivator include, but not particularly limited, water; and alcohols such as methanol, ethanol and isopropanol. Examples of the neutralizer include, but not particularly limited, carboxylic acids such as stearic acid, oleic acid and versatic acid, an aqueous solution of an inorganic acid, and carbon dioxide.

In addition, the method for producing the polymer of the present embodiment preferably comprises a step of adding a stabilizer for rubber to the resulting polymer of the conjugated diene compound and/or the aromatic vinyl compound from the viewpoints of prevention of gel generation after polymerization and improvement in stability during processing. The stabilizer for rubber is not particularly limited, a known one can be used, and for example, an antioxidant such as 2,6-di-tert-butyl-4-hydroxytoluene (BHT), n-octadecyl-3-(4'-hydroxy-3',5'-di-tert-butylphenol)propionate or 2-methyl-4,6-bis[(octylthio)methyl]phenol is preferable.

Furthermore, the method for producing the polymer of the present embodiment preferably comprises a step of obtaining the polymer of the conjugated diene compound and/or the aromatic vinyl compound from the resulting polymer solution of the conjugated diene compound and/or the aromatic vinyl compound after completion of polymerization.

The method for obtaining the polymer of the conjugated diene compound and/or the aromatic vinyl compound from the polymer solution of the conjugated diene compound and/or the aromatic vinyl compound is not particularly limited, and a known method can be used. Examples include a method in which the solvent is separated from the polymer solution of the conjugated diene compound and/or the aromatic vinyl compound by steam stripping or the like, and thereafter the polymer of the conjugated diene compound and/or the aromatic vinyl compound is separated by filtration, and dehydrated and dried to provide the polymer of the conjugated diene compound and/or the aromatic vinyl compound; a method in which the polymer solution of the conjugated diene compound and/or the aromatic vinyl compound is concentrated in a flushing tank, and is devolatilized by a vent extruder or the like to provide the polymer of the conjugated diene compound and/or the aromatic vinyl compound; and a method in which the polymer solution of the conjugated diene compound and/or the aromatic vinyl compound is directly devolatilized by a drum dryer or the like to provide the polymer of the conjugated diene compound and/or the aromatic vinyl compound.

### Examples

The present invention is described in more detail with reference to the following Examples, but the present invention is not limited to the following Examples at all.

### (Example 1)

A copolymer of 1,3-butadiene and styrene was produced as follows. A 100-L reactor equipped with a stirring blade with four paddles, in which the ratio (L/D) of the length (L) to the inner diameter (D) was 5, was used as a polymerization tank. In a pipe through which starting materials were fed to the polymerization tank, 1,3-butadiene from which impurities such as moisture were removed, styrene and n-hexane were mixed under conditions of 220 g/min, 71 g/min and 1,290 g/min, respectively, to provide a mixture. The resulting mixture was further mixed with n-butyllithium (0.84 mmol/min) by a static mixer immediately before being loaded to the polymerization tank, to treat a deactivation agent of a polymerization initiator contained in the monomer, providing a monomer mixture. The resulting monomer mixture was continuously fed from the bottom to the polymerization tank, and 2,2-bis(2-oxolanyl)propane was continuously fed from the bottom to the polymerization tank at a rate of 0.40 g/min. In a pipe for polymerization initiator-feeding other than the above pipe, a solution containing 20% by mass of n-butyllithium (polymerization initiator) in hexane and n-hexane were mixed in the pipe at rates of 1.12 g/min and 1,650 cc/min, respectively, and thereafter the resulting mixed solution was fed from the bottom of the polymerization tank through a pipe having an inner diameter of 6 mm to the polymerization tank.

The linear velocity of the mixed solution at the outlet of the pipe (opening of the feed port of the solution containing the polymerization initiator (n-butyllithium)) here was 0.97 m/sec and the concentration of n-butyllithium in the mixed solution was 0.02% by mass. In addition, the relationship between the concentration (C% by mass) of n-butyllithium in the mixed solution and the linear velocity (V m/sec) of the mixed solution at the opening was V/C = 48. The copolymerization reaction of 1,3-butadiene and styrene progressed in the polymerization tank, and a living polymer solution at a temperature of 90°C was discharged from the outlet pipe at the top portion of the polymerization tank. Here, the inside of the polymerization tank was completely filled with the polymerization liquid. It was confirmed by gas chromatographic measurement of the polymer solution that the unreacted styrene monomer and 1,3-butadiene monomer did not remain in the polymer solution. After the copolymerization reaction was continued for 120 hours, feeding of the starting materials was stopped, the solution in the polymerization tank was entirely drained, and the periphery of the feed port of the polymerization initiator (n-butyllithium) was observed, but no gel adhesion was confirmed.

### (Example 2)

A copolymer of 1,3-butadiene and styrene was produced in the same manner as in Example 1 except that the amount of the solution containing 20% by mass of n-butyllithium in hexane to be fed was 3.36 g/min and the amount of n-hexane to be fed was 1,100 cc/min in the pipe for polymerization initiator-feeding. The linear velocity of the solution containing the polymerization initiator at the outlet of the pipe for polymerization initiator-feeding (opening of the feed port of the solution containing the polymerization initiator (n-butyllithium)) was 0.65 m/sec and the concentration of the polymerization initiator (n-butyllithium) in the solution containing the polymerization initiator was 0.091% by mass. In addition, the V/C was 7.1. The copolymerization reaction of 1,3-butadiene and styrene progressed in the polymerization tank, and a living polymer solution at a temperature of 90°C was discharged from the outlet pipe at the top portion of the polymerization tank. It was confirmed by gas chromatographic measurement of the polymer solution that the unreacted styrene monomer and 1,3-butadiene monomer did not remain in the polymer solution. After the copolymerization reaction was continued for 120 hours, feeding of the starting materials was stopped, the solution in the polymerization tank was entirely drained, and the periphery of the feed port of the polymerization initiator (n-butyllithium) was observed, but no gel adhesion was confirmed.

### (Example 3)

A copolymer of 1,3-butadiene and styrene was produced as follows. A 200-L reactor equipped with a stirring blade with four paddles was used as a polymerization tank. In a pipe through which starting materials were fed to the polymerization tank, 1,3-butadiene from which impurities such as moisture were removed, styrene and n-hexane were mixed under conditions of 440 g/min, 142 g/min and 2,580 g/min, respectively, to provide a mixture. The resulting mixture was further mixed with n-butyllithium (1.68 mmol/min) by a static mixer immediately before being loaded to the polymerization tank, to treat a deactivation agent of a polymerization initiator contained in the monomer, providing a monomer mixture. The resulting monomer mixture was continuously fed from the bottom to the polymerization tank, and 2,2-bis(2-oxolanyl)propane was continuously fed from the bottom to the polymerization tank at a rate of 0.8 g/min. In a pipe for polymerization initiator-feeding other than the above pipe, a solution containing 20% by mass of n-butyllithium (polymerization initiator) in hexane and n-hexane were mixed in the pipe at rates of 6.72 g/min and 3,300 cc/min, respectively, and thereafter the resulting mixed solution was fed from the bottom of the polymerization tank through a pipe having an inner diameter of 6 mm to the polymerization tank. The linear velocity of the mixed solution at the outlet of the pipe (opening of the feed port for the solution containing the polymerization initiator (n-butyllithium)) here was 1.9 m/sec and the concentration of n-butyllithium in the mixed solution was 0.061% by mass. In addition, the V/C was 32. The copolymerization reaction of 1,3-butadiene and styrene progressed in the polymerization tank, and a living polymer solution at a temperature of 90°C was discharged from the outlet pipe at the top portion of the polymerization tank. It was confirmed by gas chromatographic measurement of the polymer solution that the unreacted styrene monomer and 1,3-butadiene monomer did not remain in the polymer solution. After the copolymerization reaction was continued for 120 hours, feeding of the starting materials was stopped, the solution in the polymerization tank was entirely drained, and the periphery of the feed port of the polymerization initiator (n-butyllithium) was observed, but no gel adhesion was confirmed.

### (Example 4)

A copolymer of 1,3-butadiene and styrene was produced in the same manner as in Example 1 except that the amount of the solution containing 20% by mass of n-butyllithium (polymerization initiator) in hexane to be fed was 6.72 g/min and the amount of n-hexane to be fed was 2,200 cc/min in the pipe for polymerization initiator-feeding. The linear velocity of the solution containing the polymerization initiator (n-butyllithium) at the outlet of the pipe for polymerization initiator-feeding (opening of the feed port of the solution containing the polymerization initiator (n-butyllithium)) was 1.3 m/sec and the concentration of the polymerization initiator (n-butyllithium) in the solution containing the polymerization initiator (n-butyllithium) was 0.093% by mass. In addition, the V/C was 14. The copolymerization reaction of 1,3-butadiene and styrene progressed in the polymerization tank, and a living polymer solution at a temperature of 90°C was discharged from the outlet pipe at the top portion of the polymerization tank. It was confirmed by gas chromatographic measurement of the polymer solution that the unreacted styrene monomer and 1,3-butadiene monomer did not remain in the polymer solution. After the copolymerization reaction was continued for 120 hours, feeding of the starting materials was stopped, the solution in the polymerization tank was entirely drained, and the periphery of the feed port of the polymerization initiator (n-butyllithium) was observed, but no gel adhesion was confirmed.

### (Example 5)

A polymer of styrene was produced in the same manner as in Example 1 except that the monomer fed to the polymerization tank was styrene (300 g/min) instead of the mixture of 1,3-butadiene (220 g/min) and styrene (71 g/min). It was confirmed by gas chromatographic measurement of the polymer solution that the unreacted styrene monomer did not remain in the polymer solution discharged from the outlet pipe at the top portion of the polymerization tank. After the polymerization reaction was continued for 120 hours, feeding of the starting materials was stopped, the solution in the polymerization tank was entirely drained, and the periphery of the feed port of the polymerization initiator (n-butyllithium) was observed, but no gel adhesion was confirmed.

### (Comparative Example 1)

A copolymer of 1,3-butadiene and styrene was produced in the same manner as in Example 1 except that the inner diameter of the pipe for polymerization initiator-feeding was 21 mm. The linear velocity of the solution containing the polymerization initiator (n-butyllithium) at the outlet of the pipe for polymerization initiator-feeding (opening of the feed port of the solution containing the polymerization initiator (n-butyllithium)) was 0.079 m/sec and the concentration of the polymerization initiator (n-butyllithium) in the solution containing the polymerization initiator (n-butyllithium) was 0.02% by mass. In addition, the V/C was 3.9. The copolymerization reaction of 1,3-butadiene and styrene progressed in the polymerization tank, and a living polymer solution at a temperature of 90°C was discharged from the outlet pipe at the top portion of the polymerization tank. It was confirmed by gas chromatographic measurement of the polymer solution that the unreacted styrene monomer and 1,3-butadiene monomer did not remain in the polymer solution. After the copolymerization reaction was continued for 120 hours, feeding of the starting materials was stopped, the solution in the polymerization tank was entirely drained, and the periphery of the feed port of the polymerization initiator (n-butyllithium) was observed and gel adhesion was confirmed.

### (Comparative Example 2)

A copolymer of 1,3-butadiene and styrene was produced in the same manner as in Example 1 except that the solution containing 20% by mass of n-butyllithium in hexane, and n-hexane were mixed at rates of 1.12 g/min and 3,300 cc/min, respectively, in the pipe for polymerization initiator-feeding and thereafter the resulting mixed solution was fed from the bottom of the polymerization tank through a pipe having an inner diameter of 3.4 mm to the polymerization tank. The linear velocity of the mixed solution at the outlet of the pipe (opening of the feed port of the solution containing the polymerization initiator (n-butyllithium)) here was 6.1 m/sec and the concentration of n-butyllithium in the mixed solution was 0.01% by mass. In addition, the V/C was 598. It was confirmed by gas chromatographic analysis of the polymerization liquid that the unreacted styrene monomer and 1,3-butadiene monomer remained in the polymer solution obtained through the outlet pipe at the top portion of the polymerization tank.

### Industrial Applicability

The production method of the present invention enables gel adhesion around the feed port of the polymerization initiator in the polymerization tank to be suppressed, resulting in production of a conjugated diene and/or aromatic vinyl polymer without any gel incorporated.

## Claims

1. A method for producing a polymer, comprising
step (1) of continuously feeding a monomer comprising a conjugated diene compound and/or an aromatic vinyl compound to a polymerization tank, and
step (2) of continuously feeding a solution comprising an organolithium compound to the polymerization tank, wherein
a linear velocity of the solution comprising the organolithium compound at an opening of a feed port in step (2) is 0.1 to 5 m/sec, wherein the inner diameter of the pipe of the feed port is 3 to 100 mm, and wherein the position in the polymerization tank, at which the solution containing the organolithium compound is supplied is the bottom of the polymerization tank.

2. The method for producing the polymer according to claim 1, wherein the monomer comprises at least a conjugated diene compound.

3. The method for producing the polymer according to claim 1 or 2, wherein the solution comprising the organolithium compound fed to the polymerization tank has a concentration of the organolithium compound of 0.01 to 1% by mass.

## Patentansprüche

1. Verfahren zur Herstellung einer eines Polymers, umfassend:
Schritt (1) des kontinuierlichen Zuführens eines Monomers, welches eine konjugierte Dienverbindung und/oder eine aromatische Vinylverbindung umfasst, in einen Polymerisationsbehälter, und
Schritt (2) des kontinuierlichen Zuführens einer Lösung, welche eine Organolithiumverbindung umfasst, in den Polymerisationsbehälter, wobei
die lineare Geschwindigkeit der die Organolithiumverbindung enthaltenden Lösung an einer Öffnung des Einfüllanschlusses in Schritt (2) 0,1 bis 5 m/s ist, wobei der Innendurchmesser des Rohrs des Einfüllanschlusses 3 bis 100 mm beträgt, und wobei die Position in dem Polymerisationsgefäß, an der die die Organolithiumverbindung enthaltende Lösung zugeführt wird, der untere Teil des Polymerisationsgefäßes ist.

2. Verfahren zur Herstellung des Polymers nach Anspruch 1, wobei das Monomer mindestens eine konjugierte Dienverbindung umfasst.

3. Verfahren zur Herstellung des Polymers nach Anspruch 1 oder 2, wobei die dem Polymerisationsgefäß zugeführte, die Organolithiumverbindung enthaltende Lösung eine Konzentration der Organolithiumverbindung von 0,01 bis 1 Massen-% aufweist.

## Revendications

1. Procédé de production d'un polymère, comprenant
l'étape (1) d'apport continu d'un monomère comprenant un composé de diène conjugué et/ou un composé vinylique aromatique dans une cuve de polymérisation, et
l'étape (2) d'apport continu d'une solution comprenant un composé de lithium organique dans la cuve de polymérisation, dans lequel une vitesse linéaire de la solution comprenant le composé de lithium organique au niveau d'une ouverture d'un orifice d'apport à l'étape (2) est de 0,1 à 5 m/s, dans lequel le diamètre interne de la conduite de l'orifice d'apport est de 3 à 100 mm, et dans lequel la position dans la cuve de polymérisation, à laquelle la solution contenant le composé de lithium organique est introduite est le fond de la cuve de polymérisation.

2. Procédé de production du polymère selon la revendication 1, dans lequel le monomère comprend au moins un composé de diène conjugué.

3. Procédé de production du polymère selon la revendication 1 ou 2, dans lequel la solution comprenant le composé de lithium organique apporté dans la cuve de polymérisation a une concentration du composé de lithium organique de 0,01 à 1 % en masse.
